# EUROPEAN PATENT SPECIFICATION

(11) **EP 3 689 655 B1**
(45) Date of publication and mention of the grant of the patent: **10.12.2025**
(21) Application number: 20275017.0
(22) Date of filing: 29.01.2020
(51) Int. Cl.: B60J 11/08, E02F 9/16

(54) **CAB PROTECTION SYSTEM**
KABINENSCHUTZSYSTEM
SYSTÈME DE PROTECTION DE CABINE

(30) Priority: 31.01.2019 GB 201901336
(43) Date of publication of application: 05.08.2020
(73) Proprietor: ICL Tech Limited, Glasgow G64 2SA (GB)
(72) Inventor: Leaver, Andrew, Paisley, PA1 3JR (GB); McLellan, Andrew, Glasgow, G31 3DA (GB); McCracken, Mark, Glasgow, G66 4RU (GB); Downie, Nicholas, Glasgow, G61 3AL (GB)
(74) Representative: Murgitroyd & Company

(56) References cited:
- WO-A1-2011/022763
- DE-U1- 29 814 282
- GB-A- 2 194 764
- GB-A- 2 483 567
- US-A1- 2018 290 528
- US-B1- 6 276 742

## Description

### Field of the Invention

The present invention relates to the field of cabs for vehicles and work machines. More specifically, the present invention is a system for protecting the cab from theft and vandalism when the vehicle or work machine is left unattended for a prolonged period of time.

### Background of the Invention

Protection systems for the cabs of vehicles and work machines are known. They are particularly useful for work machines which will be left unattended on building and construction sites, as such machines are vulnerable to attempted theft and vandalism. These known systems comprise a plurality of panels, which are typically formed from a heavy duty plastics material, and one or more metal bars which are attached to the vehicle cab. At least some of the panels are hung from the metal bars, then all of the panels are connected together and locked in place. The result is a secure shield around the cab which prevents theft or vandalism when the system is in place.

When the system is not in use the panels need to be stored somewhere. One existing solution is to attach a metal frame basket to the roof of the cab and store the panels in the basket. The basket has a hinged metal framework lid to secure the panels in the basket. However, such metal baskets are relatively expensive to manufacture, and are susceptible to corrosion and failure of the welds used in the manufacture of the basket. Also, as the basket lid is a frame rather than a solid piece, the lid does not prevent water from accumulating inside the stored panels during wet weather.

GB2483567A discloses an apparatus, for construction and agricultural machines, comprising a plurality of guard panels arranged to be mounted on the machine cab to overlie at least a portion of one or more windows of the cab to shield said windows from attack by vandals. The panels are suspended by inverted hook parts from a raised rail on the cab roof so that they can be swung over the roof for storage.

It is an aim of the present invention to obviate or mitigate these disadvantages of existing cab protection systems.

### Summary of the Invention

According to a first aspect of the present invention there is provided a cab protection system as recited in claim 1.

The at least one first side panel may comprise upper and lower panel portions which are hinged to one another.

The at least one first side panel, the lid panel and one second side panel may each include at least one lock which locks the respective panel to an adjacent panel and/or the cab.

The plurality of protective panels may comprise a pair of first side panels suspendible from the first longitudinal attachment member, a pair of second side panels suspendible from the second longitudinal attachment member, and the lid panel suspendible from the transverse attachment member.

The system may further comprise a rear panel having a plurality of locks which lock the rear panel to adjacent panels and/or the cab.

The storage receptacle may have a first receptacle end which includes a plurality of hinge tabs projecting therefrom, and the lid panel has a first lid end which includes slots or apertures which can: (i) engage with the hinge tabs such that the lid panel is removably hinged to the first end of the receptacle, and (ii) engage with the attachment tabs or hooks such that the lid panel is suspended from the at least one attachment member.

The lid panel has a second end which may include at least one of the locks, whereby the second end of the panel can be selectively locked to a second receptacle end of the receptacle.

The receptacle may be mountable upon the vehicle or work machine.

According to a second aspect of the invention there is provided a vehicle or work machine comprising a cab and a cab protection system according to the first aspect of the invention.

### Brief Description of the Drawings

A preferred embodiment of the present invention will now be described, by way of example only, with reference to the following drawings:
Figure 1 is an exploded view of a cab protection system;
Figure 2 is a front view of a transverse attachment member of the cab protection system;
Figure 3 is a perspective view of a first longitudinal attachment member of the cab protection system;
Figure 4 is a perspective view of a second longitudinal attachment member of the cab protection system;
Figures 5(a) and 5(b) are perspective and bottom views of a front panel of the cab protection system;
Figures 6(a) and 6(b) are front views of upper and lower portions of a first left side panel of the cab protection system;
Figure 7 is a front view of a second left side panel of the cab protection system;
Figure 8 is a front view of a rear panel of the cab protection system;
Figure 9 is a front view of a first right side panel of the cab protection system;
Figure 10 is a front view of a second right side panel of the cab protection system;
Figures 11(a) and 11(b) are perspective views of left and right sides of a lidded storage receptacle of the cab protection system; and
Figures 12(a) and 12(b) are perspective views of left and right sides of the cab protection system when assembled on a cab.

### Detailed Description of the Drawings

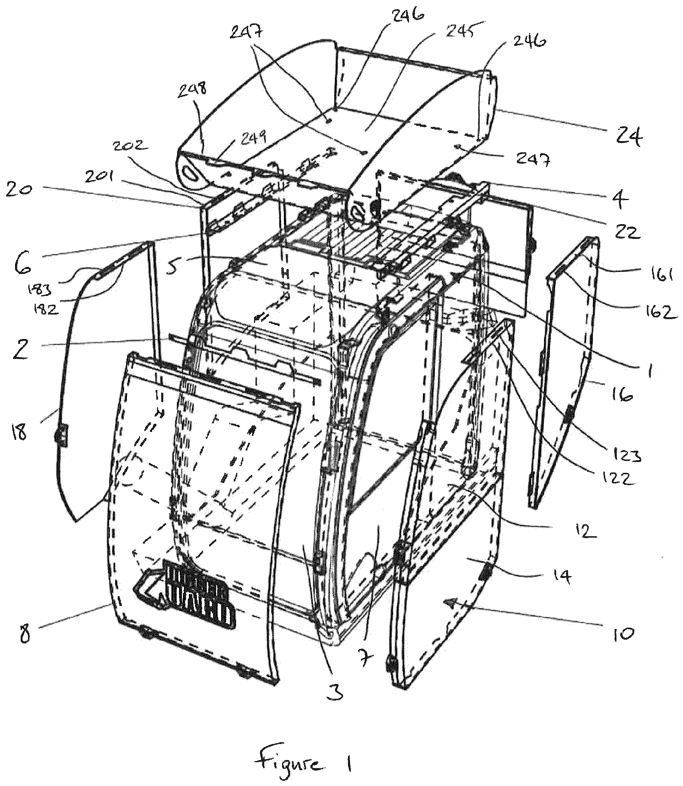

A cab protection system is shown in the exploded view of Figure 1. Whilst the system is shown here in use with the cab of a work machine (in this instance an excavator) the present invention is not limited to use with work machines and may also be used with any type of vehicle where such temporary protection is desired. Vehicle- or work machine-specific versions of the system can be created, in which the protective panels are shaped in order to fit to the shape of the cab of that specific vehicle or machine. However, the basic principles of the system would remain the same. Each of the protective panels and the container in which they are stored are preferably formed from polypropylene.

The cab 1 has a windscreen 3, and the protection system comprises a transverse attachment member 2, which is secured by mechanical fixtures to existing fittings on the cab 1 above the windscreen 3. A front panel 8 of the system hangs from the transverse attachment member 2 in order to protect the windscreen 3. Left and right side longitudinal attachment members 4,6 are also secured along either side of the cab roof 5 using mechanical fixtures engaged in existing fittings on the roof 5. "Left" and "right" in this description refer to the sides of the cab when one is sitting in the cab facing forward through the windscreen. In the excavator cab application shown left and right sides may also be referred to as the door and boom sides, respectively.

Each of the attachment members is preferably formed in metal, such as from mild steel, for example. The metal may be powder coated.

There are a pair of side panels for either side of the cab 1. On the left side, there is a first left side panel 10, which is hung from the left side longitudinal attachment member 4 and in this instance covers the door 7 of the cab 1. The first left side panel 10 comprises an upper portion 12 and a lower portion 14. The upper and lower portions 12,14 are connected to one another by a hinge connection so that they may pivot about the hinge relative to one another. This allows the panel 10 to fold in two so that the panel may fit within the storage receptacle described below. A second left side panel 16 also hangs from the left side longitudinal attachment member 4 behind the first left side panel 10 so as to cover the remainder of the left side of the cab 1.

On the right side of the cab 1 there is a pair of right side panels 18,20. Both right side panels 18,20 are hung from the right side longitudinal attachment member 6 to protect the right side of the cab 1. At the rear is a rear panel 22, which is secured to the rearmost left and right side panels 16,20 as well as an existing fitting at the rear of the cab 1, as will be described in more detail below.

The left and right side attachment members 4,6 also act as the fixing points for a storage container or receptacle 24, which is mounted upon the cab roof 5. The container 24 holds the protective panels when they are not in use, and the front panel 8 engages with the container so as to form a lid for the container in order to keep water and dirt out of the interior. Again, this will be described in more detail below.

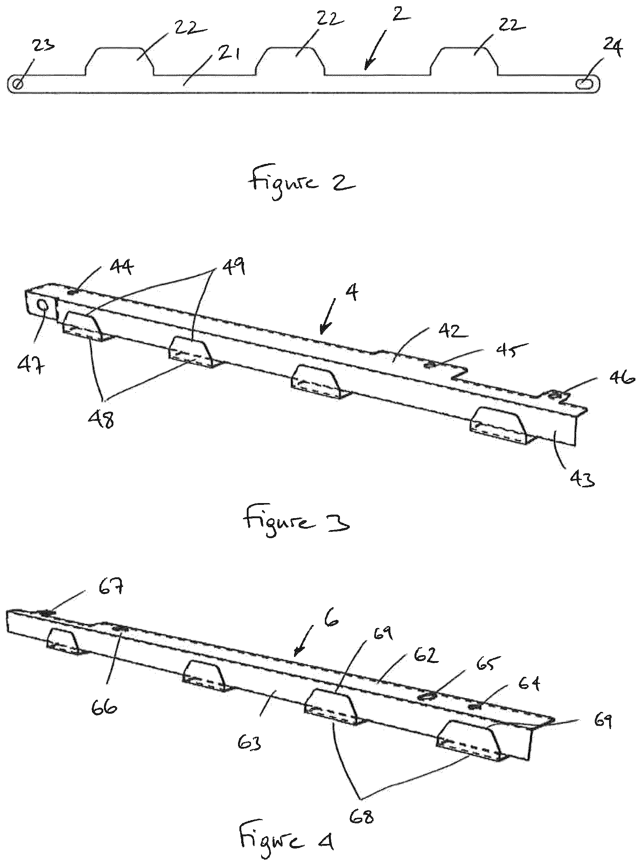

The specific system components shown in Figure 1 are shown and described in more detail with reference to Figures 2-11.

Figure 2 shows the front of the transverse attachment member 2. The member 2 is an elongate rod or bar 21, preferably formed from a suitable metal. It has at least one tab 22 projecting upwards from the bar 21. Preferably there are a plurality of tabs 22. The or each tab 22 is preferably narrower at the top than at the bottom where they connect to the bar 21, so as to assist with the engagement with the front panel 8. The tabs 22 and bar 21 are preferably integrally formed. At either end of the bar 21 are first and second attachment apertures 23,24 through which the mechanical fixtures such as nuts and bolts can be passed in order to secure the member 2 to the cab 1.

The left side attachment member 4 is shown in Figure 3. The member 4 has an elongate body, which in this embodiment has first and second body portions 42,43 which are generally perpendicular to one another such that the body has a profile in the shape of an inverted "L". The first body portion 42 is shaped to fit around any immovable contours or obstacles on the cab roof 5, and includes three attachment apertures 44-46. The two apertures 44,46 at either end of the first body portion 42 receive mechanical fixtures in order to secure the container 24 thereto. Alternatively, fixtures such as threaded rods (not shown) may be welded into the two apertures 44,46 so that they project upwardly from the first body portion 42. These rods would be received in cooperating recesses or apertures in the base of the container, and the container then fixed thereto by threaded nuts, for example. The aperture 45 intermediate the other two receives a fixture in order to secure a first end of the member 4 to the cab roof 5. The second body portion 43 also includes an aperture 47 which receives another fixture in order to secure a second end of the member 4 to the cab roof 5.

Projecting outwards from the second body portion 43 are a plurality of attachment tabs 48. The tabs 48 are bent so as to be generally right-angled, whereby a free end 49 of each tab 48 is generally perpendicular to the second body portion 43. Thus, each tab 48 defines a small channel between the free end 49 and the second body portion 43. Each tab 48 is preferably narrower at the free end 49 than where they connect to the second body portion 43, so as to assist with the engagement with the left side panels 10,16.

The right side attachment member 6 is shown in Figure 4, and has a similar arrangement to that of the left side member 4. The member 6 has an elongate body, which in this embodiment has first and second body portions 62,63 which are generally perpendicular to one another such that the body has a profile in the shape of an inverted "L". The first body portion 62 is shaped to fit around any immovable contours or obstacles on the cab roof 5, and includes four attachment apertures 64-67. The first and fourth apertures 64,67 receive mechanical fixtures in order to secure the container 24 thereto. The second and third apertures 65,66 each receive a fixture in order to secure first and second ends of the member 6 to the cab roof 5. Projecting outwards from the second body portion 63 are a plurality of attachment tabs 68. The tabs 68 are bent so as to be generally right-angled, whereby a free end 69 of each tab 68 is generally perpendicular to the second body portion 63. Thus, each tab 68 defines a small channel between the free end 69 and the second body portion 63. Each tab 68 is preferably narrower at the free end 69 than where they connect to the second body portion 63, so as to assist with the engagement with the right side panels 18,20.

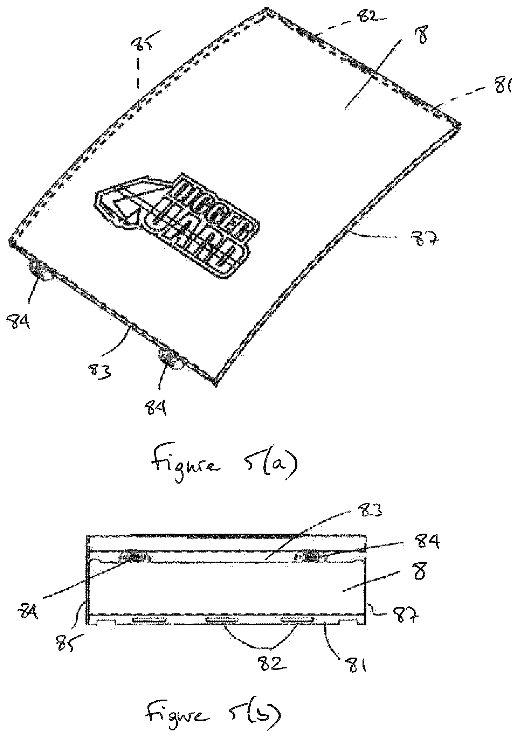

The front panel 8, which also doubles as the lid of the container 24, is shown in Figures 5(a) and 5(b). The panel is generally rectangular and dimensioned so as to cover the windscreen 3 of the cab 1. All four peripheral edges of the panel 8 have a lip to ensure that the panel cannot be prised away from the cab when in position. The panel 8 may be curved in order to replicate any contours which the front of the cab 1 and/or windscreen 3 may have. A preferred way of achieving this curvature is to form the panel 8 substantially flat, and provide recesses on the rear of the panel 8 along its longitudinal edges. The lips 85,87 which will be attached to those longitudinal edges are formed with the curvature replicating that of the cab. When those lips 85,87 are welded, or otherwise attached, to the longitudinal edges of the panel 8 they force the panel 8 to conform to that same curvature. It is also possible to form the panel 8 with the desired curvature already present, but the above method is a cheaper way to achieve the same result, mainly due to reduced tooling costs when only forming the lips with curvature as opposed to the whole panel.

A top lip 81 of the panel includes at least one slot 82 which in use will receive the at least one tab 22 of the transverse attachment member 2. Preferably, there are a plurality of slots 82 in the same way as there are preferably a plurality of the attachment tabs 22 on the member 2. A bottom lip 83 of the panel 8 includes a pair of locks 84, via which the panel can be selectively locked to the cab 1.

The locks used in the system are preferably snap-locks and comprise a standard quarter-turn locking mechanism which is housed in a lock housing. Each lock is operated with a universal triangular tipped key. A lock member which turns under the action of the key mates with a "top hat" component which is fixed to the mating surface for the lock, where that surface may be on the cab or another panel.

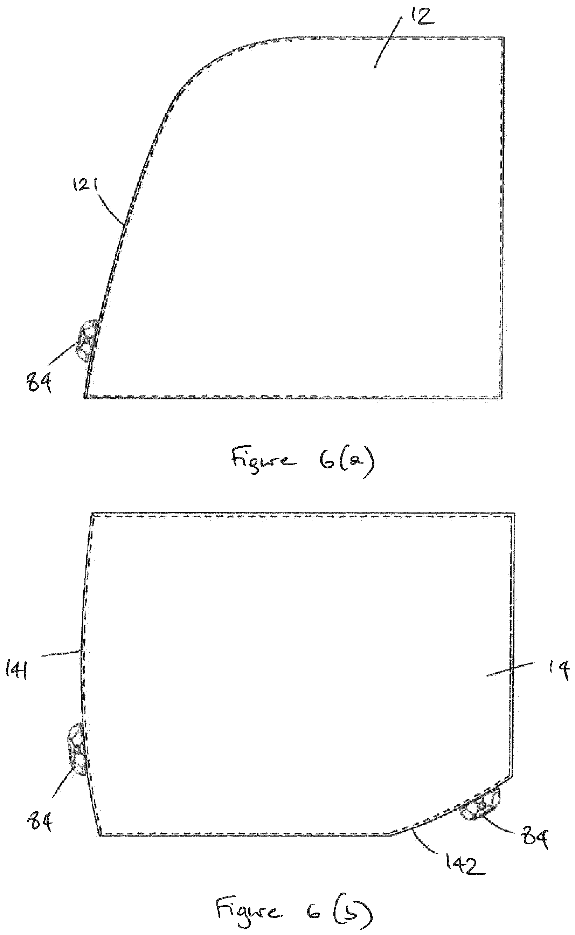

Figures 6(a) and 6(b) show the upper and lower portions 12,14 of the first right side panel 10. As described above, the two portions 12,14 are in practice hinged to one another by way of one or more hinges (not shown). The upper and lower portions 12, 14 are again shaped in order to fit over the particular shape of door used in the cab 1. As with the front panel, all of the peripheral edges of the upper and lower portions 12,14 have a lip to ensure that they cannot be prised away from the cab. A front edge 121 of the upper portion has a lock 84 which secures the upper portion 12 to the front panel 8. As visible in Figure 1, a top lip 122 of the panel upper portion 12 includes at least one slot 123 which in use will receive at least one tab 48 of the left side attachment member 4. Preferably, there are a plurality of slots 123 to match the number of available tabs 48. Front and bottom edges 141,142 of the lower portion 14 also have locks which secure the lower portion 14 to the front panel 8 and the cab, respectively.

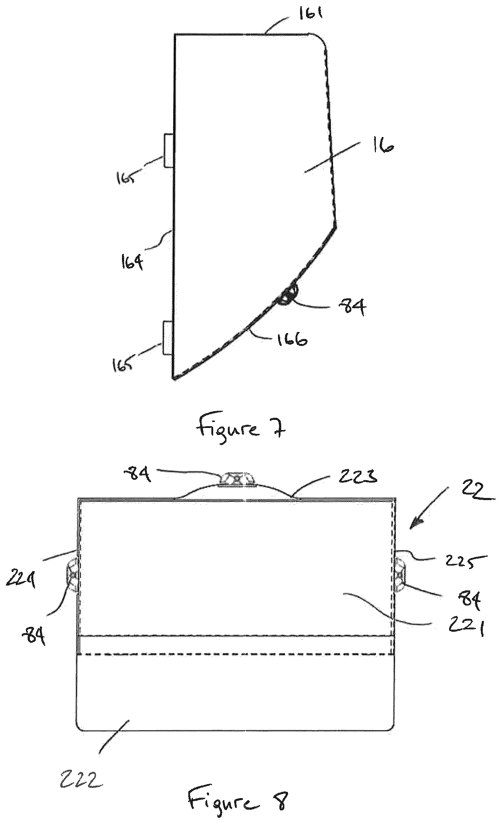

The second, or rearmost, of the left side panels is shown in Figure 7. The panel 16 is shaped and dimensioned so as to cover at least a rear side window of the cab, and as with the other panels may therefore be of different sizes and shapes depending on the specific vehicle or work machine being protected. All of the peripheral edges of the panel 16 have a lip to ensure that the panel cannot be prised away from the cab when in position. As shown in Figure 1, a top lip 161 of the panel includes at least one slot 162 which in use will receive at least one tab 48 of the left side attachment member 4. Preferably, there are a plurality of slots 162 to match the number of available tabs 48. A left side lip 164, which is the lip facing towards the front of the cab when in use, includes a plurality of tabs 165. These tabs 165 lie behind the first left side panel 10 when all the panels are in place, thereby preventing removal of the second left side panel 16. A bottom lip 166 of the panel 16 includes a lock 84, via which the panel can be selectively locked to the cab 1.

Figure 8 shows the rear panel 22 in more detail. In this particular application the rear panel 22 is generally rectangular and has upper and lower portions 221,222. The lower portion is thinner than the upper portion so that it may slide down between the cab 1 and a body portion of the excavator located immediately behind the cab. In other applications the rear panel 22 may have substantially the same thickness throughout. The rear panel has an upper lip 223 and a pair of side lips 224,225. As with the other panels the lips prevent the panel from being prised away from the cab. Each of the lips 223-225 is provided with a lock 84. The lock 84 on the upper lip 223 secures to a fitting upon the rear of the cab, whilst the locks 84 on the side lips 224,225 secure those sides of the panel to the second left and right side panels 16,20, respectively.

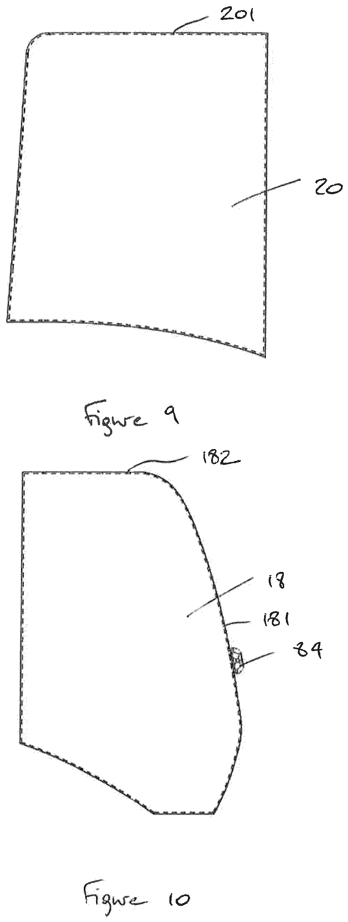

Figures 9 and 10 show the two right side panels 18,20 in more detail. The second right side panel 20 shown in Figure 9 is generally rectangular but its overall shape is again dictated by the portion of the cab which it is intended to cover. The second right side panel 20 has lip portions around the periphery of the panel in order to prevent the panel being prised away from the cab. In this particular embodiment the second right side panel is the only panel of the system which is not provided with a lock. As shown in Figure 1, a top lip 201 of the panel 20 includes at least one slot 202 which in use will receive at least one tab 68 of the right side attachment member 6. Preferably, there are a plurality of slots 202 to match the number of available tabs 68.

The first right side panel 18 shown in Figure 10 is once again shaped to correspond with the shape of the portion of the cab which it is intended to cover. The panel 18 has lip portions around the periphery of the panel in order to prevent the panel being prised away from the cab. A right side, or front, lip 181 includes a lock 84 which secures the panel to the front panel 8. As shown in Figure 1, a top lip 182 of the panel 18 includes at least one slot 183 which in use will receive at least one tab 68 of the right side attachment member 6. Preferably, there are a plurality of slots 183 to match the number of available tabs 68.

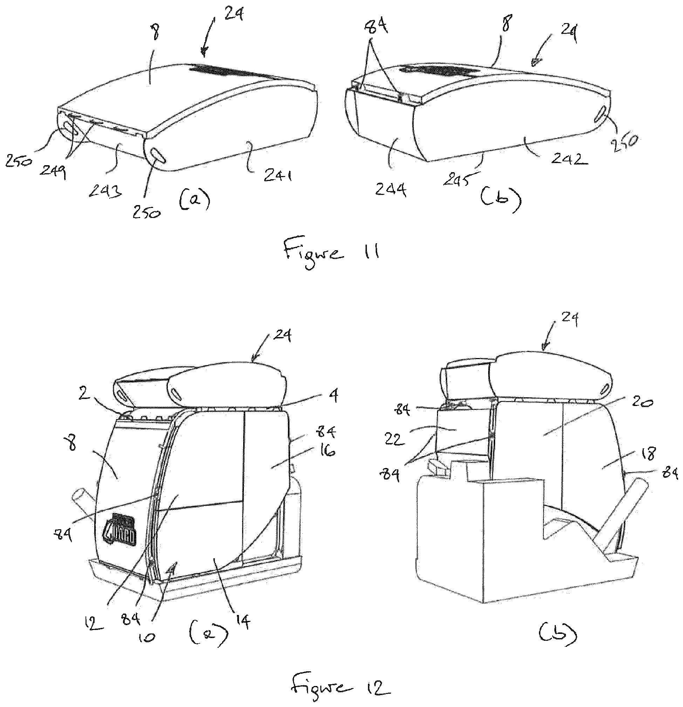

Figures 11(a) and 11(b) shown the container 24 in more detail, when the front panel 8 is attached thereto as a lid. The container comprises a pair of side walls 241,242, a pair of end walls 243,244, and a base 245 which along with the removable lid define the storage volume therein. As seen in Figure 1, the base 245 includes a plurality of fixing apertures 246 through which the mechanical fixtures secure the container 24 to the longitudinal attachment members 4,6. The base also includes one or more drain holes 247 so that water may drain from the container 24.

The side and end walls of the container 24 may be contoured and/or dimensioned so that the front panel 8 will fit flush upon the top of the container. In the illustrated embodiment the front panel 8 is curved to fit the shape of the cab of this work machine, so the top edges of the side walls 241,242 must have a corresponding curvature. A top edge 248 (shown in Figure 1) of the front end wall 243 has at least one projecting tab 249 which is substantially the same size and shape as the tabs 22 of the transverse attachment member 2. Thus, when the front panel 8 is placed upon the top of the container 24 the tabs 249 are received in the slots 82 of the panel 8 so as to form a hinged connection. The locks 84 at the other end of the front panel 8 lock the panel to a lip atop the rear end wall 244. Handles 250 may be provided at the front end of the container 24, and in this embodiment the handles 250 are integral with the side walls 241,242. The handles 250 can be used as grab handles when the container 24 is attached to the cab, and can also be used to transport the container when it is off the cab.

### Industrial Applicability

The manner in which the protection system is assembled on a vehicle or work machine cab will now be described, with particular reference to figures 1 and 12. For the purposes of this description it is assumed that the container 24 is already mounted upon the vehicle or machine, which for this embodiment is on the roof of the cab 1.

Initially, all of the panels are located in the container 24 and the front panel 8 is locked to the container 24 to form the lid thereof. Firstly, the two locks 84 are released so that the front panel 8 can be slid forward out of engagement with the tabs 249 and lifted away. The front panel 8 is then hung from the lateral attachment member 2 with the tabs 22 of that member 2 engaging in the slots 82 at the top of the front panel 8. The locks 84 at the bottom of the panel 8 are then locked to the cab so that the panel 8 is secured over the windscreen of the cab.

Next, the second left side panel 16 is hooked onto the rear portion of the left side attachment member 4, with its slots 162 engaging with the tabs 48 of the attachment member 4. The single lock 84 on the left side panel 16 is then engaged to lock the panel to the left side of the cab. The first left side panel 10 is then hung onto the front portion of the left side attachment member 4, with its slots 123 engaging with the tabs 48 of the attachment member 4. The three locks 84 on the front and bottom edges of the panel 10 are then engaged to lock the panel 10 to the front panel 8 and the cab, as described above. Hanging the two left side panels 10,16 in this order means that the front edge tabs 165 on the second left side panel 16 are behind the first left side panel 10 and inaccessible when the first panel 16 is secured in position.

The first right side panel 18 is then hung from the front portion of the right side attachment member 6, with its slots 183 engaging with the tabs 68 of the attachment member 6. The single lock 84 on the front edge of the panel 18 is then engaged to secure the panel 18 to the front panel 8. The second right side panel 20 can then be hung from the rear portion of the right side attachment member 6, with its slots 202 engaging with the tabs 68.

Finally, the rear panel 22 is placed over the rear of the cab. The top lock 84 of the rear panel 22 is engaged to secure the top of the panel to the cab, whilst the left and right side locks on the panel 22 are engaged so as to secure those sides of the panel to the rearmost edges of the second left and right side panels 16,20. In this way the second right side panel 20 cannot be removed even though it has no locks in this embodiment.

The panels are all removed by simply reversing the order of the aforementioned fitting steps.

As explained above the shape and contours of the panels of the protection system are primarily dictated by the shape and contours of the cab and cab windows of the vehicle or work machine in question. The process of preparing a system for a new vehicle or machine involves firstly scanning the cab in three dimensions. The scanned point cloud data from that initial 3D scanning is then used to develop a CAD model of the cab in question. This CAD model then allows the shape and contours of the panels for this new cab to be determined, with manufacturing drawings and associated CNC programs created so as to mass produce these new panels.

The protection system of the present invention provides a container to store the panels which is relatively inexpensive to manufacture and which will not corrode.

Furthermore, the container has a solid lid which prevents water and debris from entering the storage space and the panels stored therein. Forming the container lid from one of the protective panels also reduces the costs of the system.

The locks used on the panels may lock a portion of the panel to an adjacent panel or a portion of the cab. The invention is not limited to the specific arrangement of locks and related mating components (adjacent panel or cab portion) described in the preferred embodiment.

One of the first and second right side panels may include a lock on the edge of that panel where it abuts the other of the right side panels. The lock may engage the other panel to secure the two right side panels together.

Whilst it is preferred that the container for the panels in mounted on the vehicle or work machine this may not be possible for smaller size vehicles and machines. In these instances, the container would be left near the machine with the panels stored therein until the machine returns after its work is finished.

One or more of the lips on each panel may be welded to the edges of that panel. Alternatively, or in addition, one or more of those lips may be integrally formed with the remainder of the panel.

There are also alternative methods for forming the front panel of the system with the desired curvature to fit a particular cab or windscreen. For example, the panel itself may obtain the desired curvature via thermoforming, wherein the panel is heated and then moulded or manipulated into the required shape. Alternatively, the panel may be held in a jig in the desired shape, with the longitudinal lips then welded along the longitudinal edges of the panel so as to hold the panel in the curved shape once released from the jig.

Although the system preferably comprises a plurality of protective panels, it may only comprise a single protection panel in the event that the vehicle or work machine to which the system is to be attached has only a single window or windscreen. The receptacle for the panels may be used to securely store other items or components in the event that there is only a single panel, given that the single panel will form the lid of the receptacle when not in use on the cab and there will be no other panels to store.

These and other modifications and improvements may be incorporated without departing from the scope of the invention as defined by the appended claims.

## Claims

1. A cab protection system for a cab of a vehicle or work machine, the system comprising:
first and second longitudinal attachment members (4,6) attachable to a roof of the cab (1), and a transverse attachment member (2) attachable to a front portion of the roof of the cab;
a plurality of removable protective panels adapted to protect the cab (1), wherein at least one of the protective panels includes a lock (84) adapted to lock that at least one protective panel to the cab and/or an adjacent protective panel; and
a storage receptacle (24) for storing at least one of the protective panels;
wherein another of the plurality of protective panels is a lid panel (8) adapted so as to form a removable lid for the receptacle;
wherein the longitudinal and transverse attachment members (2,4,6) each comprise:
a plurality of attachment tabs (22) projecting therefrom, and at least some of the protective panels include slots which engage with the attachment tabs such that the panels are suspended from the attachment members; or
a plurality of attachment hooks projecting therefrom, and at least some of the protective panels include apertures which engage with the attachment hooks such that the panels are suspended from the attachment members;
and wherein the plurality of protective panels comprises at least one first side panel (10) suspendible from the first longitudinal attachment member (4), at least one second side panel (18) suspendible from the second longitudinal attachment member (6), and the lid panel (8) suspendible from the transverse attachment member (2).

2. The system of claim 1, wherein the at least one first side panel (10) comprises upper and lower panel portions (12,14) which are hinged to one another.

3. The system of either preceding claim, wherein the at least one first side panel (10), the lid panel (8) and one second side panel (18) each include at least one lock (84) which locks the respective panel to an adjacent panel and/or the cab.

4. The system of any preceding claim, wherein the plurality of protective panels comprises a pair of first side panels (10,16) suspendible from the first longitudinal attachment member (4), a pair of second side panels (18,20) suspendible from the second longitudinal attachment member (6), and the lid panel (8) suspendible from the transverse attachment member (2).

5. The system of any preceding claim, further comprising a rear panel (22) having a plurality of locks (84) which lock the rear panel to adjacent panels and/or the cab.

6. The system of any preceding claim, wherein the storage receptacle (24) has a first receptacle end (243) which includes a plurality of hinge tabs (249) projecting therefrom, and the lid panel (8) has a first lid end which includes slots (82) or apertures which can: (i) engage with the hinge tabs such that the lid panel is removably hinged to the first end of the receptacle, and (ii) engage with the attachment tabs (22) or hooks such that the lid panel is suspended from the at least one attachment member (2).

7. The system of claim 6, wherein the lid panel (8) has a second end which includes at least one of the locks (84), whereby the second end of the panel can be selectively locked to a second receptacle end (244) of the receptacle (24).

8. The system of any preceding claim, wherein the receptacle (24) is mountable upon the vehicle or work machine.

9. A vehicle or work machine comprising a cab and a cab protection system according to any preceding claim.

## Patentansprüche

1. Ein Kabinenschutzsystem für eine Kabine eines Fahrzeugs oder einer Arbeitsmaschine, wobei das System Folgendes beinhaltet:
ein erstes und ein zweites Längsbefestigungselement (4, 6), die an einem Dach der Kabine (1) befestigt werden können, und ein Querbefestigungselement (2), das an einem vorderen Abschnitt des Dachs der Kabine befestigt werden kann;
eine Vielzahl von entfernbaren Schutzplatten, die angepasst sind, um die Kabine (1) zu schützen, wobei mindestens eine der Schutzplatten eine Verriegelung (84) umfasst, die angepasst ist, um diese mindestens eine Schutzplatte an der Kabine und/oder einer benachbarten Schutzplatte zu verriegeln; und
einen Aufbewahrungsbehälter (24) zum Aufbewahren von mindestens einer der Schutzplatten;
wobei eine andere der Vielzahl von Schutzplatten eine Deckelplatte (8) ist, die angepasst ist, um einen entfernbaren Deckel für den Behälter zu bilden;
wobei das Längs- und das Querbefestigungselement (2, 4, 6) jeweils Folgendes beinhalten:
eine Vielzahl von Befestigungslaschen (22), die davon vorstehen, und wobei mindestens einige der Schutzplatten Schlitze umfassen, die mit den Befestigungslaschen in Eingriff kommen, sodass die Platten an den Befestigungselementen aufgehängt sind; oder
eine Vielzahl von Befestigungshaken, die davon vorstehen, und wobei mindestens einige der Schutzplatten Öffnungen umfassen, die mit den Befestigungshaken in Eingriff kommen, sodass die Platten an den Befestigungselementen aufgehängt sind;
und wobei die Vielzahl von Schutzplatten mindestens eine erste Seitenplatte (10), die an dem ersten Längsbefestigungselement (4) aufgehängt werden kann, mindestens eine zweite Seitenplatte (18), die an dem zweiten Längsbefestigungselement (6) aufgehängt werden kann, und die Deckelplatte (8), die an dem Querbefestigungselement (2) aufgehängt werden kann, beinhaltet.

2. System gemäß Anspruch 1, wobei die mindestens eine erste Seitenplatte (10) einen oberen und einen unteren Plattenabschnitt (12, 14) beinhaltet, die gelenkig miteinander verbunden sind.

3. System gemäß einem der vorhergehenden Ansprüche, wobei die mindestens eine erste Seitenplatte (10), die Deckelplatte (8) und eine zweite Seitenplatte (18) jeweils mindestens eine Verriegelung (84) umfassen, die die jeweilige Platte an einer benachbarten Platte und/oder der Kabine verriegelt.

4. System gemäß einem der vorhergehenden Ansprüche, wobei die Vielzahl von Schutzplatten ein Paar erste Seitenplatten (10, 16), die an dem ersten Längsbefestigungselement (4) aufgehängt werden können, ein Paar zweite Seitenplatten (18, 20), die an dem zweiten Längsbefestigungselement (6) aufgehängt werden können, und die Deckelplatte (8), die an dem Querbefestigungselement (2) aufgehängt werden kann, beinhaltet.

5. System gemäß einem der vorhergehenden Ansprüche, das ferner eine hintere Platte (22) beinhaltet, die eine Vielzahl von Verriegelungen (84) aufweist, die die hintere Platte an benachbarten Platten und/oder der Kabine verriegeln.

6. System gemäß einem der vorhergehenden Ansprüche, wobei der Aufbewahrungsbehälter (24) ein erstes Behälterende (243) aufweist, das eine Vielzahl von Gelenklaschen (249) umfasst, die davon vorstehen, und wobei die Deckelplatte (8) ein erstes Deckelende aufweist, das Schlitze (82) oder Öffnungen umfasst, die: (i) mit den Gelenklaschen in Eingriff kommen können, sodass die Deckelplatte entfernbar mit dem ersten Ende des Behälters gelenkig verbunden ist, und (ii) mit den Befestigungslaschen (22) oder -haken in Eingriff kommen können, sodass die Deckelplatte an dem mindestens einen Befestigungselement (2) aufgehängt ist.

7. System gemäß Anspruch 6, wobei die Deckelplatte (8) ein zweites Ende aufweist, das mindestens eine der Verriegelungen (84) umfasst, wodurch das zweite Ende der Platte selektiv an einem zweiten Behälterende (244) des Behälters (24) verriegelt werden kann.

8. System gemäß einem der vorhergehenden Ansprüche, wobei der Behälter (24) an dem Fahrzeug oder der Arbeitsmaschine montiert werden kann.

9. Ein Fahrzeug oder eine Arbeitsmaschine, das/die eine Kabine und ein Kabinenschutzsystem gemäß einem der vorhergehenden Ansprüche beinhaltet.

## Revendications

1. Un système de protection de cabine pour une cabine d'un véhicule ou d'un engin de chantier, le système comprenant :
un premier et un deuxième élément de fixation longitudinal (4, 6) pouvant être fixés à un toit de la cabine (1), et un élément de fixation transversal (2) pouvant être fixé à une portion avant du toit de la cabine ;
une pluralité de panneaux de protection amovibles conçus pour protéger la cabine (1), au moins un des panneaux de protection incluant une serrure (84) conçue pour verrouiller cet au moins un panneau de protection à la cabine et/ou à un panneau de protection adjacent ; et
un réceptacle de stockage (24) destiné à stocker au moins un des panneaux de protection ;
dans lequel un autre de la pluralité de panneaux de protection est un panneau formant couvercle (8) conçu de façon à former un couvercle amovible pour le réceptacle ;
dans lequel les éléments de fixation longitudinaux et transversal (2, 4, 6) comprennent chacun :
une pluralité de pattes de fixation (22) faisant saillie à partir de ceux-ci, au moins certains des panneaux de protection incluant des fentes dans lesquelles s'engrènent les pattes de fixation de sorte que les panneaux sont suspendus aux éléments de fixation ; ou
une pluralité de crochets de fixation faisant saillie à partir de ceux-ci, au moins certains des panneaux de protection incluant des orifices dans lesquels s'engrènent les crochets de fixation de sorte que les panneaux sont suspendus aux éléments de fixation ;
et dans lequel la pluralité de panneaux de protection comprend au moins un premier panneau latéral (10) pouvant être suspendu au premier élément de fixation longitudinal (4), au moins un deuxième panneau latéral (18) pouvant être suspendu au deuxième élément de fixation longitudinal (6), et le panneau formant couvercle (8) pouvant être suspendu à l'élément de fixation transversal (2).

2. Le système de la revendication 1, dans lequel l'au moins un premier panneau latéral (10) comprend des portions de panneau supérieure et inférieure (12, 14) qui sont reliées par charnière l'une à l'autre.

3. Le système de l'une ou l'autre revendication précédente, dans lequel l'au moins un premier panneau latéral (10), le panneau formant couvercle (8) et un deuxième panneau latéral (18) incluent chacun au moins une serrure (84) qui verrouille le panneau respectif à un panneau adjacent et/ou à la cabine.

4. Le système de n'importe quelle revendication précédente, dans lequel la pluralité de panneaux de protection comprend une paire de premiers panneaux latéraux (10, 16) pouvant être suspendus au premier élément de fixation longitudinal (4), une paire de deuxièmes panneaux latéraux (18, 20) pouvant être suspendus au deuxième élément de fixation longitudinal (6), et le panneau formant couvercle (8) pouvant être suspendu à l'élément de fixation transversal (2).

5. Le système de n'importe quelle revendication précédente, comprenant en outre un panneau arrière (22) ayant une pluralité de serrures (84) qui verrouillent le panneau arrière à des panneaux adjacents et/ou à la cabine.

6. Le système de n'importe quelle revendication précédente, dans lequel le réceptacle de stockage (24) a une première extrémité de réceptacle (243) qui inclut une pluralité de pattes de charnière (249) faisant saillie à partir de celle-ci, et le panneau formant couvercle (8) a une première extrémité de couvercle qui inclut des fentes (82) ou des orifices qui peuvent : (i) s'engrener avec les pattes de charnière de sorte que le panneau formant couvercle est relié de façon amovible par charnière à la première extrémité du réceptacle, et (ii) s'engrener avec les pattes de fixation (22) ou les crochets de sorte que le panneau formant couvercle est suspendu à l'au moins un élément de fixation (2).

7. Le système de la revendication 6, dans lequel le panneau formant couvercle (8) a une deuxième extrémité qui inclut au moins une des serrures (84), moyennant quoi la deuxième extrémité du panneau peut être verrouillée de façon sélective à une deuxième extrémité de réceptacle (244) du réceptacle (24).

8. Le système de n'importe quelle revendication précédente, dans lequel le réceptacle (24) peut être monté sur le véhicule ou l'engin de chantier.

9. Un véhicule ou engin de chantier comprenant une cabine et un système de protection de cabine selon n'importe quelle revendication précédente.
